# EUROPÄISCHE PATENTSCHRIFT

(11) **EP 2 289 022 B1**
(45) Veröffentlichungstag und Bekanntmachung des Hinweises auf die Patenterteilung: **23.05.2018**
(21) Anmeldenummer: 09761769.0
(22) Anmeldetag: 11.06.2009
(51) Int. Cl.: G06K 9/32, G06K 9/00, G06F 9/44

(54) **VERFAHREN UND VORRICHTUNG ZUR AUTOMATISCHEN ERMITTLUNG VON STEUERELEMENTEN IN COMPUTERANWENDUNGEN**
METHOD AND APPARATUS FOR AUTOMATICALLY DETERMINING CONTROL ELEMENTS IN COMPUTER APPLICATIONS
PROCÉDÉ ET DISPOSITIF DE DÉTERMINATION AUTOMATIQUE D' ÉLÉMENTS DE COMMANDE DANS DES APPLICATIONS INFORMATIQUES

(30) Priorität: 12.06.2008 DE 102008028581
(43) Veröffentlichungstag der Anmeldung: 02.03.2011
(73) Patentinhaber: SAP SE, 69190 Walldorf (DE)
(72) Erfinder: URBAN, Matthias, 10247 Berlin (DE); KAPOOR, Vikas, 10318 Berlin (DE); DAHLKE, Stefan, 12555 Berlin (DE); WIECHEN, Jochen, 10405 Berlin (DE)
(74) Vertreter: Müller-Boré & Partner Patentanwälte PartG mbB
(86) Internationale Anmeldenummer: PCT/EP2009/057247
(87) Internationale Veröffentlichungsnummer: WO 2009/150207

(56) Entgegenhaltungen:
- WO-A-2005/038648
- US-A- 6 046 740
- US-A- 6 054 990
- US-A1- 2008 195 958

## Beschreibung

Die Erfindung betrifft ein Verfahren zur automatischen Identifizierung von mindestens einem Steuerelement in einer Anwendungsansicht einer beliebigen Anwendung und eine Vorrichtung zur automatischen Identifizierung von mindestens einem Steuerelement.

Die Komplexität von Computeranwendungen steigt ständig. Selbst relativ einfache Textverarbeitungsprogramme verfügen heute über eine Funktionalität, die schwer überschaubar ist. Die Komplexität von Programmen z.B. zur Simulation technischer Vorgänge (beispielsweise zur Simulation von Halbleiterschaltungen oder anderer elektrotechnischer Schaltungen), zur Finanzbuchhaltung, Risikosteuerung oder Warenhaltung ist noch um Größenordnungen höher. Die Handhabung dieser Computeranwendungen für den Einzelnen wird damit immer schwieriger. Die Handhabung solcher Computeranwendungen durch die Hersteller wird ebenfalls immer komplexer, insbesondere weil parallele Änderungen am Programm durch unterschiedliche Personen sich in der Dokumentation und in Online-Hilfesystemen niederschlagen müssen.

Für die wirtschaftliche Erstellung z.B. von Schulungsunterlagen und Online-Hilfesystemen für bestehende Anwendungen ist die Verwendung eines spezialisierten Werkzeugs notwendig. Dieses Werkzeug erhebt genaue Informationen über Aussehen und Verhalten der grafischen Benutzerschnittstelle, und erstellt auf dieser Basis Dokumente, die z.B. zur Schulungsunterstützung und in der Online-Hilfe eingesetzt werden können.
Dafür müssen Steuerelemente, wie z.B. Schaltflächen, Eingabemasken oder Auswahlfelder in der Computeranwendung automatisch erkannt werden. Diese Informationen können dann z.B. dafür verwendet werden, um automatisch Erklärungen zur Benutzung der Computeranwendung zu generieren. Es können so Lerninhalte oder Dokumentationen automatisch erstellt werden.

In bisher bekannten Verfahren für die Erkennung von Steuerelementen in Computerapplikationen werden, soweit bekannt, vor allem strukturelle Methoden (MSAA, Windows API, ...) benutzt. Diese bieten jedoch, applikationsabhängig, über diese Schnittstellen nur mehr oder minder vollständige und richtige Informationen über die Steuerelemente an, oft auch gar keine. Gängige Erkennungsalgorithmen benutzen die Information der strukturellen Methoden unverarbeitet und sind damit vollkommen abhängig von der Schnittstelleninformation, wodurch sich häufig Lücken oder Fehler in einer Steuerelementerkennung ergeben.

WO 2005/038648 (Koninkl Philips): offenbart, dass eine gewünschte grafische Benutzeroberfläche skizziert und dann in den Speicher gescannt wird. Skizziert Objekte wie Fenster, Listen, Schaltflächen und Rahmen werden automatisch erkannt und für die erstellende grafische Benutzeroberfläche normiert. Beziehungen zwischen den Objekten werden in einer Baumhierarchie aufgezeichnet, in der Layoutinformationen und Informationen von Anmerkungen in der Skizze beigefügt werden. Die Baumhierarchie wird dann zur Erzeugung der grafische Benutzeroberfläche auf eine Zielplattform formatiert.

US 6,054,990 (Tran Bao Q) offenbart eine grafische Dateneingabesystem zur Annahme und Verarbeitung Handskizzen und Schriften, so dass der Benutzer schnell graphischen Objekten in einer Zeichnung auf einem handgehaltenen, mobile Computer mit einem relativ kompakten Bildschirm angeben kann.

US 6,046,740 (Laroche, 2000) offenbart ein Verfahren grafische Objekte zu erkennen, indem die graphischen Informationen gesammelt durch "Spionage" zu einer Reihe von Regeln verarbeitet werden, nach denen das Objekt verstanden wird.

Der vorliegenden Erfindung liegt die Aufgabe zugrunde, ein Verfahren und eine Vorrichtung zu schaffen, mit dem Steuerelemente in beliebigen Anwendungen automatisch in jeder Situation lückenlos, korrekt und präzise automatisch erkannt werden können, wobei die Anwendungen in keinster Weise für eine solche Erkennung vorbereitet sein müssen.

Diese Aufgabe wird erfindungsgemäß durch ein Verfahren mit den Merkmalen des Anspruchs 1 und eine Vorrichtung mit den Merkmalen des Anspruchs 15. gelöst.

Die Unteransprüche stellen vorteilhafte Ausgestaltungen der Erfindung unter Schutz.

Mit dem erfindungsgemäßen Verfahren und der erfindungsgemäßen Vorrichtung wird ein Werkzeug geschaffen, das eine automatische Erkennung von Steuerelementen in beliebigen Anwendungen ermöglicht. Die Erkennung kann dabei erfolgen, ohne dass eine Nutzerinteraktion hierfür erforderlich wäre, wobei unterschiedliche Steuerelemente einer Anwendung, beispielsweise unterschiedliche Schaltflächen, Auswahlfelder oder Eingabemasken in jeder Situation präzise und zuverlässig erkannt werden können.

Unter einem Steuerelement wird hier ein Element einer Anwendung beispielsweise in Form einer Schaltfläche, eines Auswahlfeldes, einer Eingabemaske oder dergleichen verstanden, das zur Bedienung der Anwendung von einem Nutzer betätigt, angeklickt oder anderweitig bedient werden kann.

Eine Anwendung kann eine Computeranwendung in Form einer beliebigen Softwareapplikation sein, die auf einem Computer auszuführen ist.

Die vorliegende Erfindung ist anwendbar auf beliebige Anwendungen, die in keiner Weise besonders eingerichtet sein müssen. Das vorgestellte Verfahren und die vorgestellte Vorrichtung bilden damit ein Werkzeug, das auf eine Anwendung aufgesetzt werden kann, ohne dass hierfür eine Anpassung der Anwendung, also beispielsweise eines zu analysierenden Computerprogramms, erforderlich wäre.

Die Erfindung ermöglicht die Kombination graphischer und struktureller Erkennungsmethoden zur Extraktion von graphischen und strukturellen Daten aus einer Anwendungsansicht einer Anwendung. Auf diese Weise können Steuerelemente in der Anwendungsansicht sicher und zuverlässig anhand unterschiedlicher Informationen identifiziert werden. Liefert eine strukturelle Erkennungsmethode keine ausreichenden Informationen zur Identifizierung eines Steuerelementes, kann (zusätzlich oder alternativ) auf eine graphische Erkennungsmethode zurückgegriffen werden, anhand derer das Steuerelement dann eindeutig identifiziert werden kann.

Die Erfindung wird nachfolgend unter Bezugnahme auf die Figuren der Zeichnungen an mehreren Beispielen näher erläutert. Es zeigen:
- Fig. 1: eine Ansicht einer typischen Computeranwendung in Verbindung mit einem Beispiel eines Programms zur automatischen Erkennung von Steuerelementen;
- Fig. 2: ein Beispiel eines Aufzeichnungsprozesses der Bedienung der Computeranwendung;
- Fig. 3: ein Beispiel einer Objektschablone;
- Fig. 4: ein Beispiel eines graphischen Methodenobjektes;
- Fig. 5: ein Beispiel eines MSAA Methodenobjekts;
- Fig. 6: ein Beispiel einer Objektschablone für den ausgewählten Eintrag einer Aufklappliste (Combo-Box);
- Fig. 7: eine Darstellung einzelner Elemente eines Beispiels

- Fig. 8: der Erfindung; eine schematische Darstellung des Aufbaus einer Anwendungsschablone;
- Fig. 9: eine Darstellung eines Beispiels der Erfindung in Form eines Flussdiagramms;
- Fig. 10: einen Ausschnitt einer XML-Datei einer Anwendungsschablone mit einer Objektschablone;
- Fig. 11: eine schematische Darstellung einer Erkennung einer Schaltfläche in einer Anwendungsansicht;
- Fig. 12: eine schematische Darstellung eines weiteren Beispiels in Form eines Flussdiagramms.

Zunächst soll anhand von konkreten Beispielen die Funktionalität einiger Beispiele des Verfahrens und der Vorrichtung beschrieben werden.

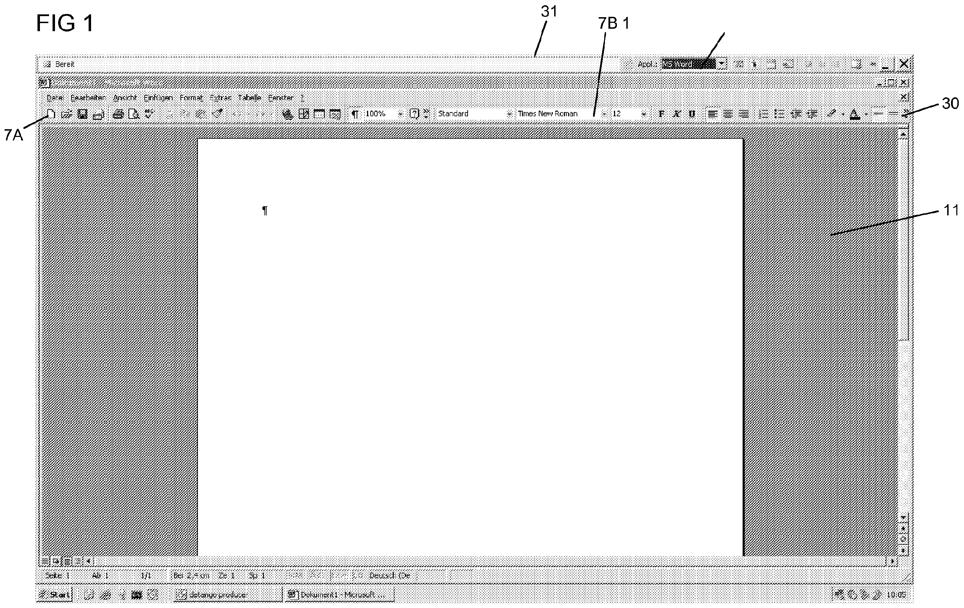

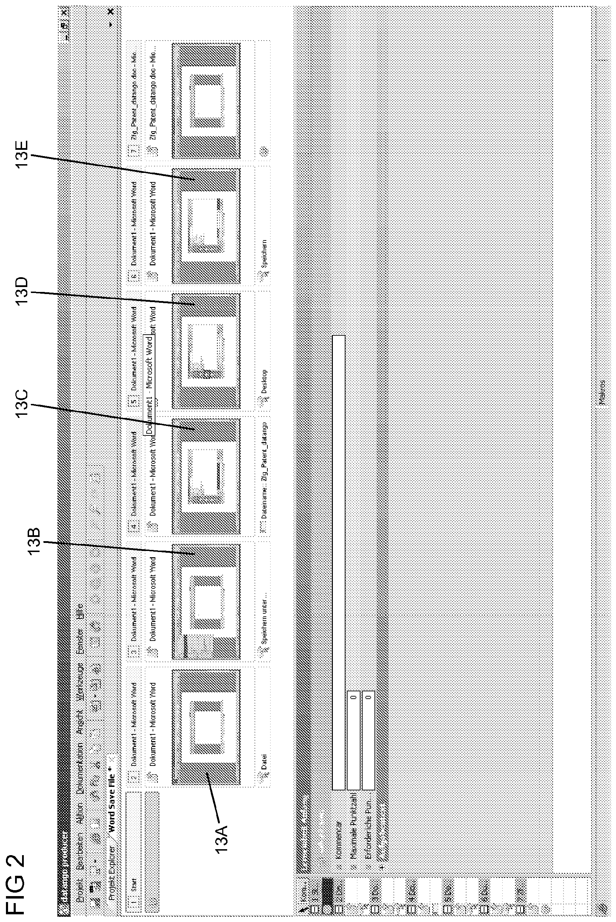

Dabei soll zunächst anhand von Fig. 1 und 2 erläutert werden, wie das erfindungsgemäße Verfahren auf eine auf einem Computer auszuführende Anwendung 11 in Form einer Softwareapplikation angewendet wird. Die Anwendung 11 kann beispielsweise eine Textverarbeitung sein, wobei dies in keiner Weise beschränkend für das erfindungsgemäße Verfahren sein soll. Das erfindungsgemäße Verfahren und ebenso die erfindungsgemäße Vorrichtung sind in allgemeiner Weise für unterschiedlichste Arten von Anwendungen 11 einsetzbar, wobei die Anwendungen 11 auch unterschiedliche Betriebssysteme verwenden können.

Das erfindungsgemäße Verfahren (und in gleicher Weise die erfindungsgemäße Vorrichtung) dient dazu, Steuerelemente 7A, 7B innerhalb einer Anwendung 11 in automatischer Weise zu identifizieren, ohne dass hierfür eine Nutzerinteraktion erforderlich wäre. Auf diese Weise können bei der Ausführung einer Anwendung 11 Informationen gesammelt und gespeichert werden, die es beispielsweise möglich machen, den Bedienungsablauf einer Anwendung 11 aufzuzeichnen und zu dokumentieren oder bei der Ausführung einer Anwendung 11 unterschiedlich geartete Informationen zu sammeln und zu speichern.

Fig. 1 bis 2 zeigen die automatische Erkennung von Steuerelementen 7A, 7B anhand einer typischen PC Anwendung 11, wie einer Textverarbeitung oder einem Graphikprogramm. Die Erfindung ist aber nicht auf diese Arten von Programmen oder PCs beschränkt. Grundsätzlich können auch andere Anwendungen 11 oder andere Betriebssysteme verwendet werden, bei denen Steuerelemente 7 dargestellt werden.

Bei der Ausführung einer Anwendung 11, beispielsweise der Textverarbeitung gemäß Fig. 1, werden abhängig von dem Ablauf der Bedienung der Anwendung 11 durch einen Nutzer unterschiedliche Anwendungsansichten angezeigt. Anwendungsansichten sind für einen Nutzer auf einem Monitor in einem Fenster sichtbare Ansichten. Die Anwendungsansichten ändern sich dabei abhängig davon, welche Bedienungsschritte ein Nutzer vornimmt. So erscheinen etwa Menüs, angezeigte Werkzeugleisten (so genannte Toolbars) ändern ihre Gestalt usw.

In Fig. 1 ist eine Anwendungsansicht eines Textverarbeitungsprogramms 11 dargestellt, die ein leeres Dokument darstellt. Am Kopf dieses Dokumentenfensters ist eine Werkzeugleiste 30 (Toolbar) angeordnet, die verschiedene Steuerelemente 7 aufweist. Ein erstes Steuerelement 7A ist z.B. eine Schaltfläche (auch Button genannt) für den Aufruf eines neuen leeren Dokumentes. Ein zweites Steuerelement 7B ist ein Kombinationsfeld (eine so genannte Combo-Box), die der Auswahl der Schriftart dient. Zahlreiche weitere Steuerelemente 7 sind vorhanden, mit denen die Anwendung 11 bedient werden kann.

Mittels des Programms 31, das Beispiele des erfindungsgemäßen Verfahrens und der erfindungsgemäßen Vorrichtung zur Verfügung stellt, können beliebige Prozesse der Anwendung 11 aufgezeichnet werden. Dabei führt die Anwendung 11 ungehindert und in gewohnter Art und Weise die Aktionen aus. Während des Aufnahmeprozesses werden die einzelnen Anwendungsansichten analysiert, es werden alle Informationen extrahiert, u.a. Steuerelemente erkannt, und im Programm 31 gespeichert.

Ziel des im Folgenden dargestellten Beispiels ist es, aus der Bedienung der Anwendung 11 mittels einer automatischen Erkennung von Steuerelementen 7 automatisch eine Funktionsbeschreibung der Anwendung 11 zu generieren. Der Fachmann erkennt, dass dieses Beispiel die Erfindung nicht beschränkt, sondern nur ein Beispiel für viele Anwendungen ist.

Beispielsweise führt der Benutzer unterschiedliche Bedienschritte aus, um ein Dokument in einem bestimmten Ordner auf dem Computer zu speichern. Dazu muss er mit einer Computermaus in an sich bekannter Weise auf verschiedene Steuerelemente 7 der Anwendung 11 drücken und Eingaben für den Dateinamen in Masken eintragen und / oder auch Tastaturbefehle ausführen.

Bei der Bedienung der Anwendung 11 zeichnet das Programm 31 nach jeder Bedienaktion eines Nutzers die sich ergebende Anwendungsansicht auf. Fig. 2 zeigt das Ergebnis einer Aufzeichnung dieser Schritte. Nach jeder Aktion wird vom Programm 31 eine Anwendungsansicht 13A-E erzeugt und gespeichert, damit diese später ausgewertet werden kann.

In Fig. 2 ist z.B. in einer ersten Anwendungsansicht 13A der Zustand nach dem Drücken der Schaltfläche für den Befehl "Datei" dargestellt.

In bekannter Weise wird nach Drücken der Schaltfläche "Datei" ein Drop-down Menü mit verschiedenen Funktionen angezeigt. Eine davon ist der Befehl "Speichern unter...". Die zweite Anwendungsansicht 13B zeigt die Auswahlmöglichkeit für den Befehl "Speichern unter...".

Die dritte Anwendungsansicht 13C zeigt ein neues Fenster, in dem der Dateiname und der Speicherort angegeben werden können.

Die vierte Anwendungsansicht 13D zeigt eine der möglichen Auswahlmöglichkeiten für einen Speicherort, nämlich den Desktop.

Die fünfte Anwendungsansicht 13E zeigt die Auswahl eines Steuerelementes 7 zum Speichern.

In den Anwendungsansichten 13A-E werden verschieden gestaltete Steuerelemente 7 verwendet, die durch Beispiele des erfindungsgemäßen Verfahrens automatisch erkannt werden, wobei es durch die automatische Erkennung der Steuerelemente 7 in den Anwendungsansichten 13A-E möglich ist, den Bedienungsablauf nachzuverfolgen und aufzuzeichnen.

In der in Fig. 1 dargestellten oberen Leiste des Programms 31 ist eine Aufklappliste angeordnet, mit der verschiedene so genannte Anwendungsschablonen 1 ausgewählt werden können. Das Programm 31 verfügt dazu über eine Anzahl von Anwendungsschablonen 1, in denen vorgespeicherte Objektschablonen 2 zur Erkennung von Steuerelementen 7 in einer bestimmten Anwendung sowie globale Einstellungen für die Erkennung gespeichert sind. Typische Anwendungsschablonen 1 können beispielsweise eine Textverarbeitung, eine Tabellenkalkulation, eine Präsentationssoftware, ein Datenbanksystem oder eine Buchhaltungssoftware betreffen.

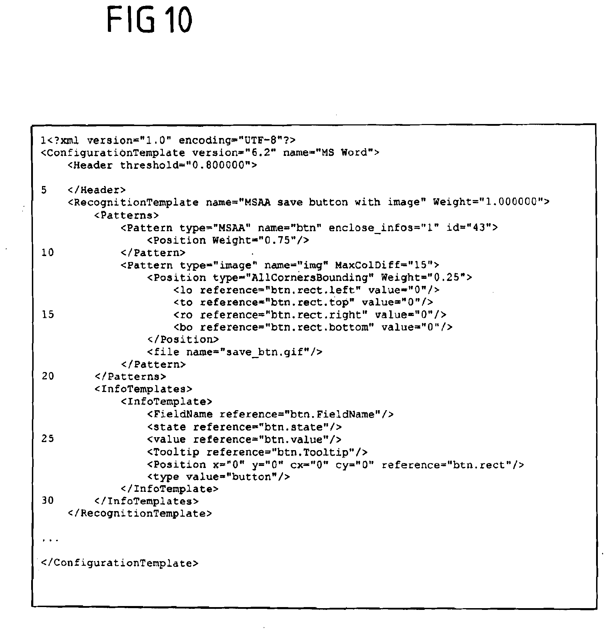

Beispielhaft ist in Fig. 10 ein Auszug aus dem Quelltext einer Anwendungsschablone 1 dargestellt, die gerade eine Objektschablone 2 enthält.

In einer einer bestimmten Anwendung 11 zugeordneten Anwendungsschablone 1 ist mindestens eine Objektschablone 2 enthalten. Eine Objektschablone 2 enthält Informationen über eine Klasse von Steuerelementen 7 der bestimmten Anwendung 11 in Form von so genannten Erkennungsmustern. So kann eine Objektschablone 2 Informationen z.B. über alle Schaltflächen (so genannte "Buttons", also einen bestimmten Steuerelementtyp) einer Anwendung 11 enthalten. Ein weiterer Steuerelementtyp ist z.B. eine "ComboBox", wobei ein weiteres Beispiel für eine spezifische Klasse eine "ComboBox" mit einem grauen Rahmen der Höhe 20 Pixel und einem schwarzen Dreieck im rechten Bereich ist.

Jeder Objektschablone 2 wird ein Gewicht zugeordnet, das angibt, mit welcher Präzision eine Objektschablone 2 ein Steuerelement 7 beschreibt. Das Gewicht hängt dabei ab von der Art der in einer Objektschablone 2 enthaltenen Informationen: beispielsweise ist eine MSAA (Microsoft Active Accessibility)-Beschreibung eines Steuerelementes 7 im Allgemeinen präziser als eine Beschreibung über graphische Elemente (siehe hierzu unten im Einzelnen).

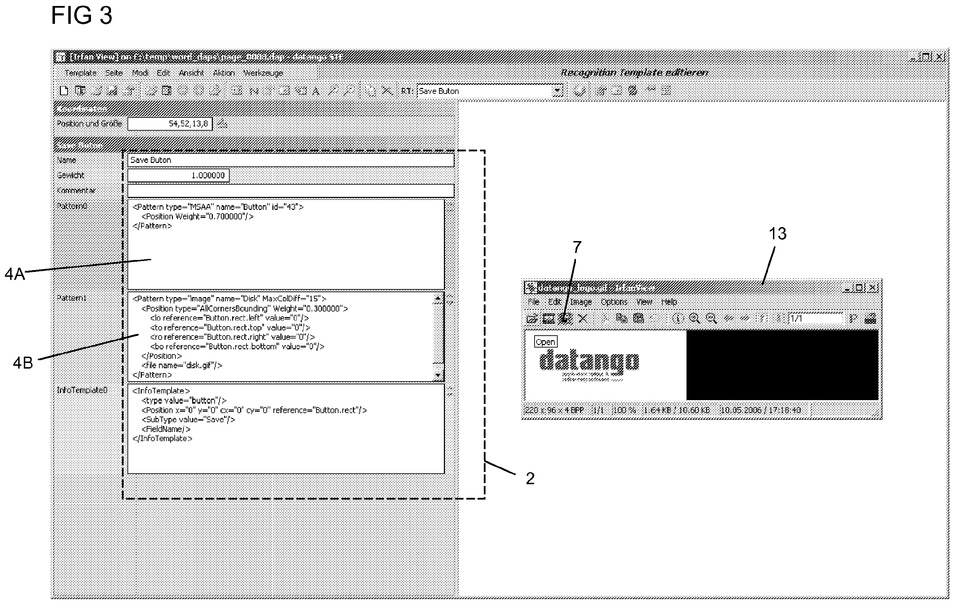

Fig. 3 zeigt in der linken Hälfte eine solche Objektschablone 2 mit Erkennungsmustern 4A, B und deren Parametern. In der rechten Hälfte ist eine Anwendungsansicht 13 eines Graphikprogramms zu sehen, auf die diese Objektschablone 2 innerhalb des späteren Verfahrens der Erkennung angewendet werden wird.

Im dargestellten Beispiel geht es um die Erkennung des Steuerelementes 7 "Datei speichern", das in der Anwendung 11 als Schaltfläche mit einem Diskettensymbol verwendet wird.

Die Objektschablone 2 verfügt über mehrere Erkennungsmuster 4A, 4B, die auf unterschiedliche Weise das Steuerelement 7 beschreiben.

Das erste Erkennungsmuster 4A verwendet Angaben gemäß der von der Anwendung 11 definiert bereit gestellten Schnittstelle MSAA (Microsoft Active Accessibility), bei der Steuerelemente 7 beispielsweise über so genannte ID-Nummern gekennzeichnet sind. Vorliegend ist dem Steuerelement 7 beispielsweise die ID-Nummer 43 zugeordnet.

Das zweite Erkennungsmuster 4B verwendet gänzlich andere Angaben, nämlich Angaben über die geometrische Form in Verbindung mit der Verwendung eines Symbols, das hier in Form des Bildes "disk.gif" gespeichert ist.

Im Rahmen des erfindungsgemäßen Verfahrens können eine Vielzahl von Objektschablonen 2 vorgesehen sein, die zur Analyse der Anwendung 11 nacheinander mit graphischen Elementen, z.B. den Steuerelementen 7, der Anwendungsansichten 13A-E verglichen werden.

Zur Erkennung von Steuerelementen 7 in einzelnen Anwendungsansichten 13A-E wird - wie nachfolgend noch erläutert - generell so vorgegangen, dass eine oder mehrere so genannte Erkennungsmethoden auf eine Anwendungsansicht 13A-E angewendet werden, die als Ergebnis so genannte Methodenobjekte liefern. Diese Methodenobjekte werden dann mit vorgespeicherten Erkennungsmustern verglichen, um zu bestimmen, ob ein Steuerelement 7 in einer Anwendungsansicht 13A-E vorhanden ist oder nicht.

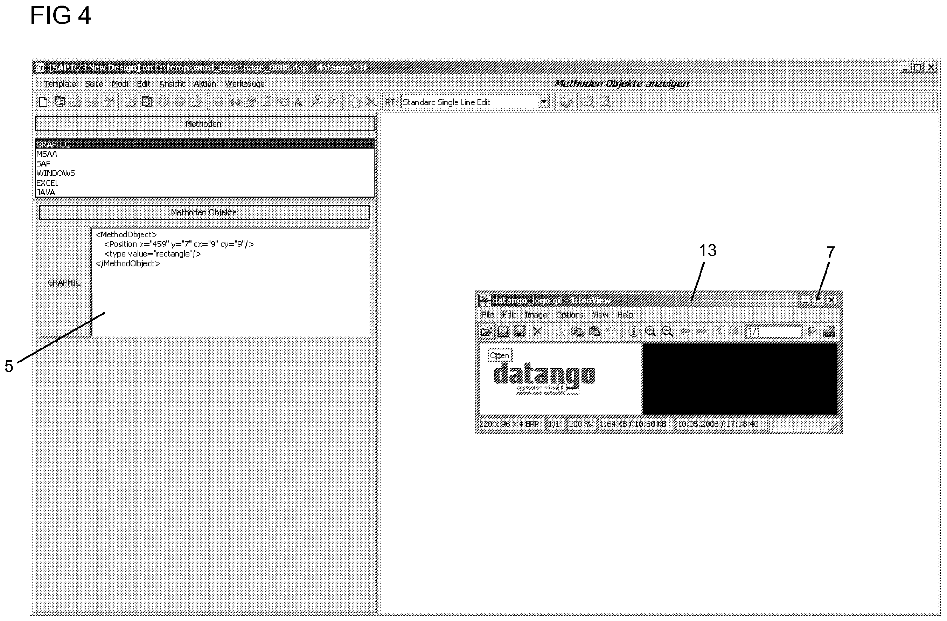

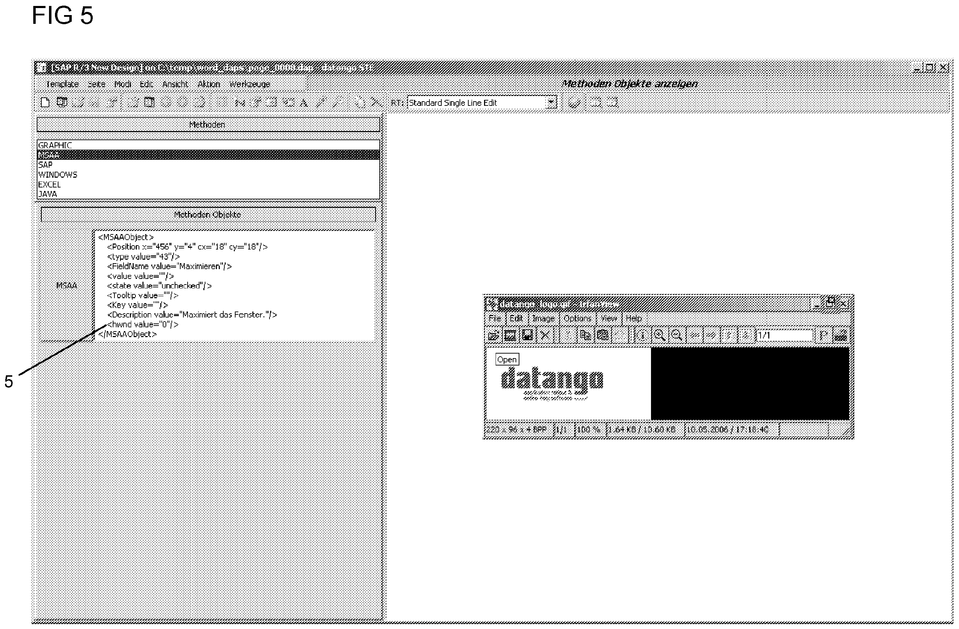

Für zwei Methoden, nämlich eine graphische Erkennungsmethode und eine strukturelle Erkennungsmethode, sind in Fig. 4 und 5 sich ergebende Methodenobjekte 5 dargestellt. Fig. 4 zeigt hier ein einer graphischen Rechteckmethode zugeordnetes Methodenobjekt 5, und Fig. 5 ein der MSAA Methode als strukturelle Erkennungsmethode zugeordnetes Methodenobjekt 5. Selektiert ist jeweils gerade das Objekt um die 'Maximieren'-Schaltfläche. Beide Methodenobjekte 5, könnten mit zwei entsprechenden vorgespeicherten Erkennungsmustern als Kombination zur Identifikation eines Steuerelements 7 (in diesem Fall der 'Maximieren'-Schaltfläche) verglichen werden.

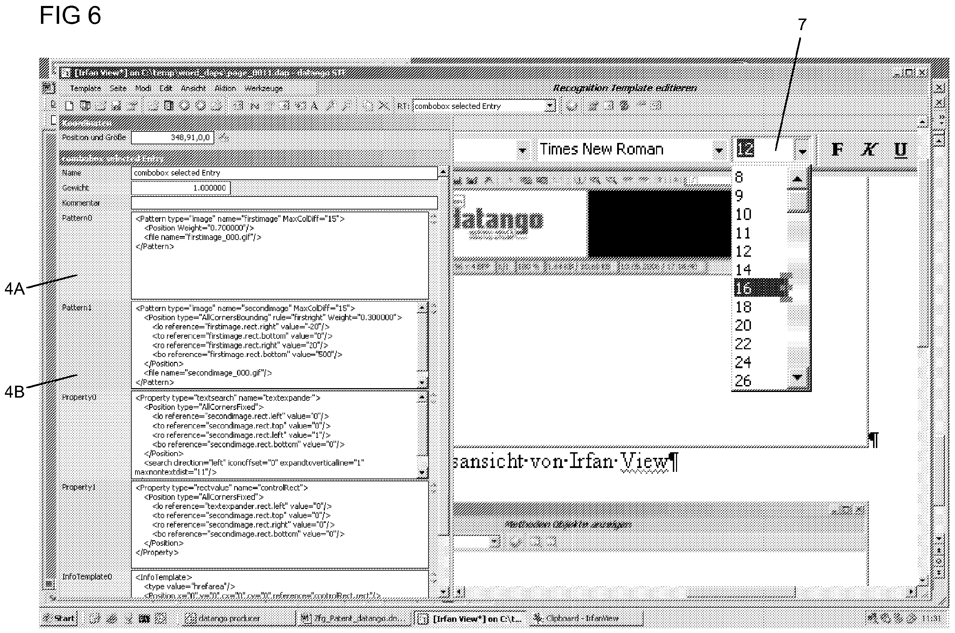

In Fig. 6 ist ein eine Anwendungsansicht darstellender Bildschirmabzug dargestellt, bei dem das selektierte Element einer Aufklappliste bzw. eines Kombinationsfeldes als Beispiel für ein Steuerelement 7 zu sehen ist. Dieses wird mittels zweier graphischer Erkennungsmuster 4A, 4B vom Typ 'image' (Erkennungsmuster 4A: Pfeil nach unten im Feld; Erkennungsmuster 4B: blaue Pixel des Listenelements) beschrieben. Über das Kombinationsfeld wird die Auswahl der Schriftgröße ermöglicht. Zur Erkennung wird ausgenutzt, dass in der aufgeklappten Liste das aktive Element (hier die Angabe "16") durch eine andere Färbung hervorgehoben ist.

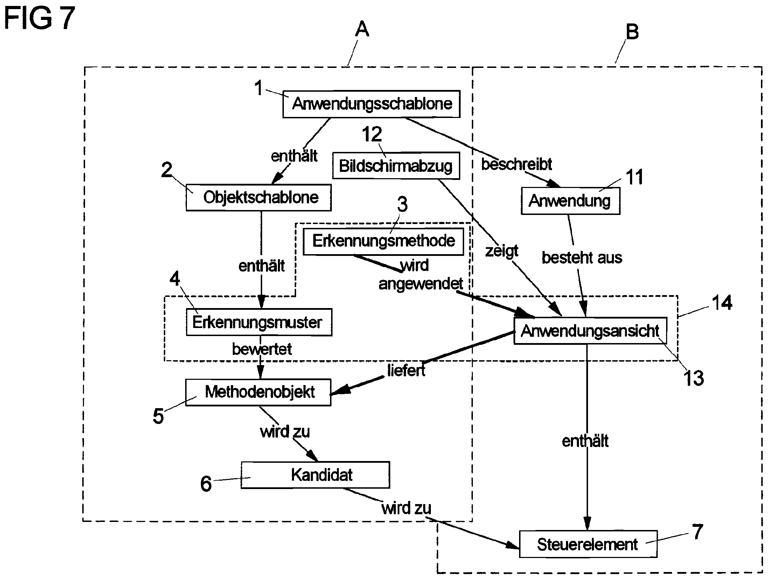

Mögliche Beispiele von Verfahren zum automatischen Identifizieren von mindestens einem Steuerelement 7 in einer Anwendungsansicht 13A-E einer Anwendung 11 sollen nachfolgend anhand von Fig. 7 bis Fig. 12 erläutert werden.

Fig. 7 zeigt schematisch das Zusammenwirken eines Beispiels des erfindungsgemäßen Verfahrens mit einer zu analysierenden Anwendung 11. In Fig. 7 sind dabei schematisch zwei Bereiche A und B dargestellt, wobei dem Bereich A das Beispiel der Erfindung zuzuordnen ist, das Informationen aus Computeranwendungen im Bereich B verarbeitet. Die Interaktion der Erfindung mit der Anwendung 11, d.h. der Anwendungsansicht 13 ist in Fig. 7 durch Pfeile dargestellt. Des Weiteren sind die einzelnen Elemente in ihren Wirkbeziehungen dargestellt.

Die in Fig. 7 dargestellten und im Folgenden beschriebenen Objekte können als Software implementiert sein oder auch in Form von Hardware, z.B. einem ASIC-Chip implementiert sein. Auch ist es möglich, eine Kombination von Soft- und Hardware zu verwenden.

Im Folgenden wird unter einer Anwendung 11 eine beliebige Computeranwendung, d.h. ein Computerprogramm, verstanden, die von einem Beispiel des erfindungsgemäßen Verfahrens oder eines Beispiels einer erfindungsgemäßen Vorrichtung analysiert oder überprüft werden soll. Die Anwendung 11 ist für diese Analyse oder Überprüfung nicht speziell ausgerüstet worden, und muss die Eingriffe durch die Verfahren oder Vorrichtung in keiner besonderen Art und Weise unterstützen.

Eine Anwendungsansicht 13 ist eine von mehreren Ansichten, die einem Benutzer während der Arbeit mit der Anwendung präsentiert werden. Eine häufige Form einer Anwendungsansicht 11 ist z.B. ein Formular, das der Benutzer ausfüllen muss, eine Ansicht eines leeren Dokumentes einer Textverarbeitung mit einer Werkzeugleiste (Toolbar) 30, wie in Fig. 1 dargestellt, oder ein Einstellungs-Dialog in einer Textverarbeitung oder einem Betriebssystem. Eine Anwendung 11 weist in der Regel eine Vielzahl von Anwendungsansichten 13 auf.

Eine Anwendungsansicht 13 enthält mindestens ein Steuerelement 7. Typische Beispiele für Steuerelemente 7 sind Schaltflächen, Eingabe- und Auswahlfelder, Menüs, Menüeinträge, Markierungsfelder, Optionsfelder, Baumeinträge. Durch eine Analyse einer Anwendungsansicht 13 können Mengen von Steuerelementen 7 ermittelt werden.

Von der Anwendungsansicht 13 muss ein Bildschirmabzug 12 unterschieden werden. Der Bildschirmabzug 12 ist ein Rasterbild einer vorliegenden Momentaufnahme einer Anwendungsansicht 13.

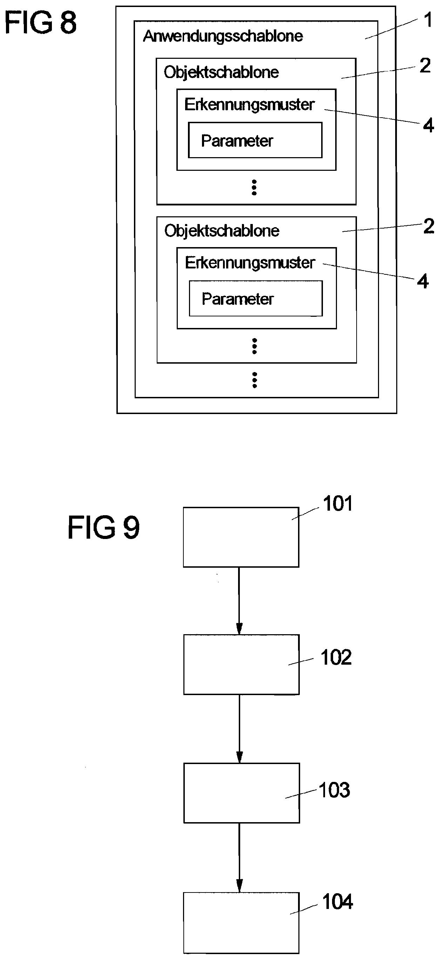

Die Objekte des Bereiches A in Fig. 7 sind in der Regel Teil eines Beispiels der Vorrichtung oder des Verfahrens. Bei dem Verfahren zur automatischen Identifizierung von Steuerelementen 7 in einer Anwendungsansicht 13A-E einer Anwendung 11 wird von einer Anwendungsschablone 1 ausgegangen, die, wie in Fig. 8 schematisch dargestellt, mindestens eine Objektschablone 2 aufweist. In Fig. 10 ist eine Anwendungsschablone 1 in Form eines Auszugs einer XML-Datei dargestellt.

Die Anwendungsschablone 1 umfasst Objektschablonen 2 für eine Anwendung 11 (Fig. 8). Damit wird die Menge der überhaupt erkennbaren Steuerelemente 7 in einer Anwendungsansicht 13 einer Anwendung 11 festgelegt.

Die Objektschablone 2 weist mindestens ein vorgespeichertes Erkennungsmuster 4 auf (Fig. 8), das eine Zusammenstellung von Parametern darstellt, die eine bestimmte Art von Methodenobjekt 5 einer konkreten Erkennungsmethode 3 beschreibt. Zu jeder Objektschablone 2 wird ein Gewicht angegeben, das die Präzision der Beschreibung dieser Klasse angibt.

Sollen in einer Anwendungsansicht 13 Steuerelemente 7 identifiziert werden, so wird eine Erkennungsmethode 3 durch ein Erkennungsmittel 14 auf die Anwendungsansicht 13 angewendet. Die Erkennungsmethode 3 liefert als Ergebnis Methodenobjekte 5, die anschließend durch die Anwendung von Erkennungsmustern bewertet werden.

Alle Anwendungsschablonen 1 und Objektschablonen 2 werden für die Ansichten einer Anwendung 11 vorab produziert, und liegen zum Zeitpunkt der Erkennung gespeichert vor.

Die Erkennungsmethode 3 generiert aus der Anwendungsansicht 13 Methodenobjekte 5. Die Eigenschaften der Methodenobjekte 5 werden mit den Parametern der Erkennungsmuster 4 verglichen; stimmen diese hinreichend gut überein, entstehen für initiale Methodenobjekte 5 potentielle Kandidaten 6 für Steuerelemente 7.

Die verwendeten Erkennungsmethoden 3 lassen sich grundsätzlich in zwei Klassen unterteilen, nämlich strukturelle und graphische Methoden.

Strukturelle Erkennungsmethoden 3 setzen voraus, dass eine Anwendung kooperativ ist, und über definierte Schnittstellen Informationen über die Struktur einer Anwendungsansicht 13 preisgibt. Konkrete Beispiele für nutzbare Schnittstellen in Computer-Anwendungen sind:
Windows API: Standard Windows Programmierschnittstelle für graphische Benutzerschnittstellen; wird praktisch in allen nativen Windows-Anwendungen verwendet.
MSAA (Microsoft Active Accessibility): Programmierschnittstelle zur Unterstützung von behindertengerechten Eingabe- und Bedienhilfen; wird von vielen Anwendungen zumindest teilweise unterstützt.
Java Access Bridge: Erlaubt Windows-Anwendungen den Zugriff auf das Java Accessibility API von Java-Anwendungen.
WEB: Zugriff auf Daten von Browsern mittels DOM (Document Object Model).
SAPGUI Skript: Erlaubt Windows-Anwendungen den Zugriff auf Anwendungsdaten von SAPGUI mittels der hier implementierten Skripting-Schnittstelle.
MS Excel Native Object Model: Erlaubt Windows-Anwendungen den Zugriff auf Anwendungsdaten von MS Excel.
MS Word Native Object Model: Erlaubt Windows-Anwendungen den Zugriff auf Anwendungsdaten von MS Word.

Die Beispiele des Verfahrens und der Vorrichtung sind, wie oben schon erwähnt, nicht auf Windows-Anwendungen 11 beschränkt. Auch Anwendungen 11, die unter anderen Betriebssystemen lauffähig sind, können mit dem Verfahren und der Vorrichtung untersucht werden.

Wird beispielsweise Windows API als Schnittstelle ausgenutzt, so ist im Erkennungsmuster 4 der Klassenname der zu erkennenden Fensterklasse gespeichert, als Methodenobjekte 5 ergeben sich alle Fenster einer Anwendungsansicht 13 mit ihren Klassennamen. Der Vergleich der Parameter entspricht dem Vergleich des im Erkennungsmuster 4 gespeicherten Klassennamens mit dem Klassennamen des aktuellen Methodenobjekts 5 (Fensters). Stimmen diese überein, ist der Erkennungsabstand Null; andernfalls ist der Erkennungsabstand das Gewicht des Erkennungsmusters, in einem konkreten Beispiel das der Position.

Der Begriff des Erkennungsabstands wird im Kontext des Erkennungsprozesses in einem späteren Abschnitt noch näher erläutert.

Wird HTML, Excel, SAPGUI Skript, Java oder MSAA als Schnittstelle ausgenutzt, so ist im Erkennungsmuster 4 der Typ des Objekts gespeichert (z.B. Schaltfläche, Textfeld, Tabellenzelle usw.), und die Methodenobjekte 5 sind alle sich aus der jeweiligen Erkennungsmethode 3 ergebenden Objekte einer Anwendungsansicht 13. Der Vergleich der Parameter entspricht dem Vergleich des im Erkennungsmuster 4 gespeicherten Typs (durch die ID-Nummer (,Id') gekennzeichnet) mit dem Typ des aktuellen Methodenobjekts 5. Stimmen diese überein, ist der Erkennungsabstand Null; andernfalls ist der Erkennungsabstand das Gewicht des Erkennungsmusters, in einem konkreten Beispiel das der Position.

Strukturelle Erkennungsmethoden kommunizieren mit der Anwendung 11 über die beschriebenen Schnittstellen, und können nur angewendet werden, wenn eine laufende Instanz der Anwendung 11 vorhanden ist.

Graphische Erkennungsmethoden arbeiten hingegen mit einem Bildschirmabzug 12 einer Anwendungsansicht 13 und orientieren sich allein am optischen Erscheinungsbild der Steuerelemente 7. Es wird angenommen, dass diese aus leicht zu erkennenden graphischen Primitiven aufgebaut sind. Zwei besonders wichtige Primitive sind:
Bilder: Werden Bilder als graphische Primitive verwendet, so ist im Erkennungsmuster 4 der Dateiname des zu suchenden Bildes gespeichert, und die Methodenobjekte 5 sind alle möglichen Pixelgebiete des Bildschirmabzugs 12 einer Anwendungsansicht 13. Der Vergleich der Parameter entspricht dem Suchen des in der Datei gespeicherten Bildes auf dem Bildschirmabzug 12 innerhalb des angegebenen Bereiches. Wird das Bild gefunden, ist der Erkennungsabstand Null; andernfalls ist der Erkennungsabstand das Gewicht des Erkennungsmusters, in einem konkreten Beispiel das der Position.
Rechtecke: Werden Rechtecke als graphische Primitive verwendet, so sind im Erkennungsmuster 4 acht Farben gespeichert, die die Randfarben eines Rechtecks angeben, nämlich an Punkten oben links, oben mittig, oben rechts, rechts mittig, rechts unten, unten mittig, unten links, links mittig. Jede dieser Farben ist mit einem Gewicht versehen. Die Methodenobjekte 5 sind alle Rechtecke des Bildschirmabzugs 12 einer Anwendungsansicht 13. Der Vergleich der Parameter ist das Vergleichen der Randfarben eines jeden Rechtecks mit den im Erkennungsmuster 4 hinterlegten Farben. Es wird ein Erkennungsabstand, der mit Null initialisiert wird, wie folgt berechnet: Stimmt eine Randfarbe an der entsprechenden Stelle nicht mit der im Erkennungsmuster 4 hinterlegten überein, wird der Erkennungsabstand um das entsprechende Gewicht der Farbe erhöht. Somit ergibt sich nach dem Vergleich der acht Farben ein finaler Erkennungsabstand. Wenn ein Rechteck-Erkennungsmuster nicht als initiales (erstes) Erkennungsmuster 4 innerhalb einer Objektschablone eingesetzt wird, wird das durch seine Farbpunkte beschriebene Rechteck an genau der durch die Position beschriebenen Stelle gesucht. Befindet sich dort kein Rechteck, wird der Erkennungsabstand um das Gewicht der Position und das Gewicht der Summe aller Farbgewichte erhöht. Findet man an genau der Stelle ein Rechteck, so werden wie oben beschrieben die Farbpunkte verglichen.

Graphische Erkennungsmethoden benötigen keine laufende Instanz der Anwendung 11. Sie liefern als einzige Information die genaue Position des erkannten Bildelements.

Alle Methoden können einzeln oder in Kombination miteinander verwendet werden.

Die Besonderheit des beschriebenen Verfahrens liegt in der Verwendung graphischer Erkennungsmethoden 3 zur Erkennung von Steuerelementen 7 sowie der flexiblen Kombinationsmöglichkeit von strukturellen und graphischen Erkennungsmethoden 3. Für die Beschreibung einer bestimmten Klasse von Steuerelementen 7 können die Erkennungsmethoden 3 beliebig miteinander kombiniert werden, um Steuerelemente 7 in allen Details korrekt zu beschreiben.

Weiterhin bietet das beschriebene Verfahren die Möglichkeit, Steuerelemente 7 zu erkennen, über die keine strukturelle Erkennungsmethode 3 Informationen liefern kann. Zum Beispiel können auf diese Weise Textfelder mittels graphischer Rechtecke und deren Randfarbpunkte ermittelt werden.

Zudem ist eine Präzisierung und/oder Korrektur der unverarbeiteten Information der strukturellen Erkennungsmethoden 3 möglich.

Als Beispiel für eine Präzisierung kann beispielsweise sprachunabhängig die 'Speichern'-Schaltfläche von anderen Schaltflächen unterschieden werden, indem ein Bild als weiteres Merkmal des zugeordneten Steuerelements 7 benutzt wird.

Als Beispiel für eine Korrektur: was ein Nutzer als Schaltfläche sieht, ist in einer strukturellen Erkennungsmethode 3 nicht unbedingt als Schaltfläche vermerkt, sondern z.B. vielleicht als Textfeld. Innerhalb einer Objektschablone 2 besteht jedoch die Möglichkeit, die erhaltene Information der strukturellen Erkennungsmethode 3 durch zusätzliche Anwendung einer graphischen Erkennungsmethode 3 und Vergleich des sich ergebenden Methodenobjekts 5 mit einem graphischen Erkennungsmuster 4 zu korrigieren und als Schaltfläche zu deklarieren.

Ein weiteres Beispiel zur Korrektur: die strukturelle MSAA Methode generiert Methodenobjekte eines Typs 'outlineitem' mit einer ID-Nummer 36 (type=36). Der Benutzer sieht diese in der Applikation aber als 'Schaltfläche'. Dann hat man innerhalb der Objektschablone die Möglichkeit, erkannte Muster des Typs 'outlineitem' als Schaltfläche zu deklarieren.

In Fig. 9 ist schematisch und auf das Wesentliche zusammengefasst der allgemeine Ablauf eines Beispiels des erfindungsgemäßen Verfahrens dargestellt, das auf eine Anwendungsansicht 13 einer Anwendung 11 in Form eines Computerprogramms angewandt wird.

Im ersten Verfahrensschritt 101 wird mindestens ein Erkennungsmuster 4 für strukturelle oder graphische Merkmale mindestens eines Steuerelementes 7 in einer Objektschablone 2 vorgespeichert. Es handelt sich um einen initialen Konfigurationsschritt, der für jede Anwendung 11 nur einmal vorab durchgeführt werden muss.

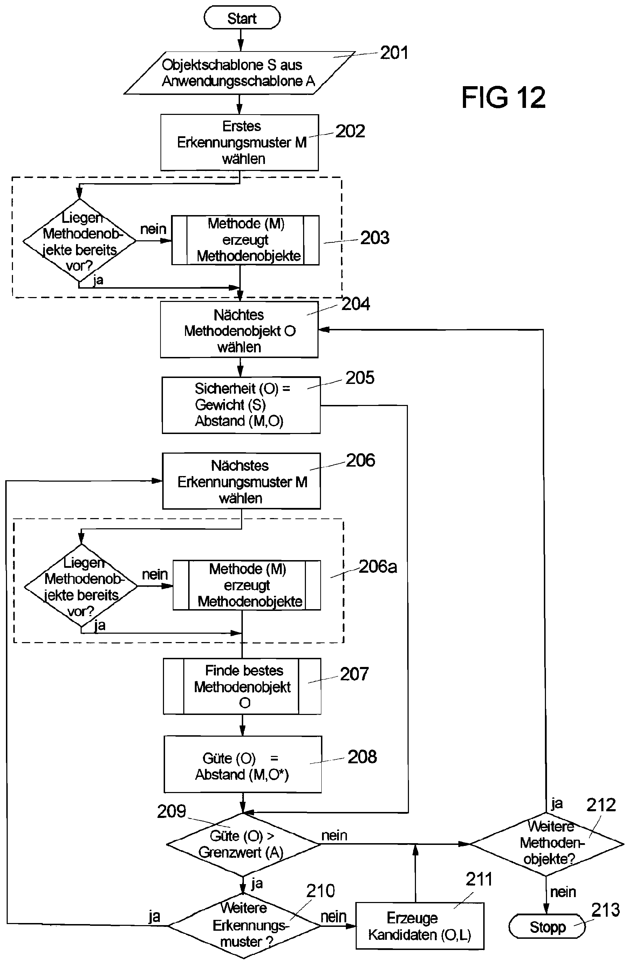

Im zweiten Verfahrensschritt 102 - bei der eigentlichen Ausführung einer Anwendung 11 - generiert ein Erkennungsmittel 14 strukturelle und/oder graphische Daten einer Anwendungsansicht 13 und unterzieht die Daten anhand des mindestens einen Erkennungsmusters 3 einer Prüfung (in dem unten noch beschriebenen Beispiel gemäß Fig. 12 kann dies die Schritte 202 bis 205 bzw. 206 bis 208 umfassen). Im dritten Verfahrensschritt 103 wird in Abhängigkeit von der Prüfung ein Maß für die Erkennungssicherheit des mindestens einen Erkennungsmusters 3 ermittelt (in dem Beispiel gemäß Fig. 12 kann dies die Schritte 209 und 210 umfassen).

Im vierten Verfahrenschritt 104 wird in Abhängigkeit von der erzielten Erkennungssicherheit der Status eines Steuerelement 7 festgelegt, d.h. er wird auf "identifiziert" oder "nicht identifiziert" gesetzt.

Im Folgenden soll ein konkretes Beispiel der Erfindung im Zusammenhang mit dem Flussdiagramm der Fig. 12 näher erläutert werden.

Das Verfahren gemäß Fig. 12 wird eingeleitet durch die Extraktion der Liste der Objektschablonen 2 aus der Anwendungsschablone 1; diese werden in der durch ihr Gewicht gegebenen Reihenfolge betrachtet. Dazu wird die Erkennungsmethode 3 des ersten in einer Objektschablone 2 aufgeführten Erkennungsmusters 4 auf die Anwendungsansicht 13 angewendet (Schritte 201, 202, 203).

Schritt 203 dient der Erzeugung der Methodenobjekte 5 durch Anwendung der Erkennungsmethode 3 (die dem jeweils betrachteten Erkennungsmuster 4 zugeordnet ist) auf die Anwendungsansicht 13. Die Erzeugung der entsprechenden Methodenobjekte 5 muss dabei nur ausgeführt werden, wenn diese Methodenobjekte 5 vorher nicht bereits erzeugt worden sind. Ist die jeweilige (graphische oder strukturelle) Erkennungsmethode 3 vorher bereits auf die Anwendungsansicht 13 angewendet worden und liegen die Methodenobjekte 5 dadurch bereits vor, muss die Erkennungsmethode 3 nicht erneut auf die Anwendungsansicht 13 angewendet werden. Es wird unmittelbar mit Schritt 204 fortgefahren.

Das Ergebnis ist eine Liste von potentiellen Steuerelementen 7, nämlich den Methodenobjekten 5. Neben den von der jeweiligen Methode erkannten Attributen wie z.B. Position und Ausdehnung wird für jedes Methodenobjekt 5 eine initiale Erkennungssicherheit angegeben. Diese ergibt sich aus dem Gewicht der Objektschablone 2 abzüglich des Erkennungsabstandes zwischen erstem Erkennungsmuster 4 und Methodenobjekt 5. Der Erkennungsabstand wird durch Vergleich der Attribute eines Methodenobjekts 5 mit den Parametern des erzeugenden Erkennungsmusters 4 bestimmt. Je weniger Übereinstimmung existiert, desto größer ist der Abstand (Schritt 205). Im weiteren Verlauf des Verfahrens wird die Erkennungssicherheit als Maß für die Güte der Erkennung weiter präzisiert.

Für jedes Methodenobjekt 5 in dieser primären Liste werden dann alle weiteren Erkennungsmuster 4 der aktuellen Objektschablone 2 betrachtet (Schritt 206). Für jedes Erkennungsmuster 4 wird wieder die angegebene Erkennungsmethode 3 auf die Anwendungsansicht 13 angewendet, wenn dies vorher nicht schon geschehen ist und die dieser Erkennungsmethode 3 zugeordneten Methodenobjekte 5 dadurch nicht schon vorliegen (Schritt 206a). Diesmal kann aber der Suchbereich durch Verwendung der schon ermittelten Attribute der schon erkannten Methodenobjekte 5 zusätzlich eingeschränkt werden. Dadurch kann die Erkennungsleistung, bei gleichzeitiger Reduzierung des Aufwands, gesteigert werden.

Das Ergebnis dieser Suche ist wiederum eine Liste von Methodenobjekten 5. Falls mehrere Methodenobjekte 5 innerhalb eines Suchbereichs existieren, wird dasjenige mit dem kleinsten Erkennungsabstand weiter betrachtet, alle anderen werden verworfen (Schritte 207, 208). Der Erkennungsabstand dieses Methodenobjekts 5 wird von der Erkennungssicherheit des gerade betrachteten Methodenobjekts 5 abgezogen. Sinkt diese dadurch unter den in der Anwendungsschablone 1 festgelegten Grenzwert, werden alle Methodenobjekte 5, die zu dem aktuell betrachteten Methodenobjekt 5 der primären Liste gehören, verworfen (Schritt 209). Anderenfalls werden aus den vorliegenden Methodenobjekten 5 ein oder mehrere Steuerelement-Kandidaten 6 erzeugt und in einer globalen Liste abgelegt (Schritt 211).

Nachdem alle primären Methodenobjekte 5 auf diese Weise bearbeitet wurden, wird mit der nächsten Objektschablone 2 fortgefahren.

Die während des Prozesses erzeugte Liste aller Kandidaten wird anschließend nach Erkennungssicherheit sortiert, und auf räumliche Überschneidung der Kandidaten hin überprüft.

Dazu wird eine Liste von Steuerelementen 7 angelegt, zu der ein Kandidat 6 nur dann hinzugefügt wird, wenn seine räumliche Ausdehnung keines der schon in der Liste befindlichen Steuerelemente überdeckt. Nach Betrachtung aller Kandidaten ist die Liste von Steuerelementen 7 das Ergebnis des Verfahrens nach Fig.12.

Anhand eines konkreten Beispiels könnte das Verfahren gemäß Fig. 12 wie folgt ablaufen.

Innerhalb einer Anwendungsschablone 1 befinden sich im Allgemeinen mehrere Objektschablonen 2 (siehe auch Fig. 8). In einem konkreten Beispiel sollen das die drei Objektschablonen 2:
A. 'combobox selected entry'
B. 'MSAA Button'
C. 'MSAA Underline Button'

Sein. Die XML-Repräsentation der Anwendungsschablone 1 mit den drei Objektschablonen 2 ist wie folgt gegeben:

```
 <?xml version="1.0" encoding="UTF-8"?>
 <ConfigurationTemplate version="6.2" name="Patent Example">
   <Header threshold="0.800000">
   </Header>
   <Global>
       <GRAPHIC Force8bit="0">
       </GRAPHIC>
   </Global>
   <RecognitionTemplate name="combobox selected entry" Weight="1.0">
       <Patterns>
          <Pattern type="image" name="firstimage" MaxColDiff="15">
              <Position Weight="0.700000"/>
              <file name="firstimage_000.gif"/>
          </Pattern>
          <Pattern type="image" name="secondimage" MaxColDiff="15">
              <Position type="AllCornersBounding" rule="firstright"
              Weight="0.3">
                 <lo reference="firstimage.rect.right" value="-20"/>
                 <to reference="firstimage.rect.bottom" value="0"/>
                 <ro reference="firstimage.rect.right" value="20"/>
                 <bo reference="firstimage.rect.bottom" value="500"/>
              </Position>
              <file name="secondimage_000.gif"/>
          </Pattern>
       </Patterns>
       <Properties>
          <Property type="textsearch" name="textexpander">
              <Position type="AllCornersFixed">
                 <lo reference="secondimage.rect.left" value="0"/>
                 <to reference="secondimage.rect.top" value="0"/>
                 <ro reference="secondimage.rect.left" value="2"/>
                 <bo reference="secondimage.rect.bottom" value="0"/>
              </Position>
              <search direction="left" iconoffset="0"
              expandtoverticalline="1" maxnontextdist="11"/>
          </Property>
          <Property type--"rectvalue" name--"controlRect">
              <Position type="AllCornersFixed">
                 <lo reference="textexpander.rect.left" value="0"/>
                 <to reference="secondimage.rect.top" value="0"/>
                 <ro reference="secondimage.rect.right" value="0"/>
                 <bo reference="secondimage.rect.bottom" value="0"/>
              </Position>
          </Property>
       </Properties>
       <InfoTemplates>
          <InfoTemplate>
              <type value="hrefarea"/>
              <Position reference="controlRect.rect"/>
              <SubType value="ComboBoxListItem"/>
              <FieldName reference="textexpander.text"/>
          </InfoTemplate>
       </InfoTemplates>
   </RecognitionTemplate>
   <RecognitionTemplate name="MSAA Button" Weight="0.990000">
       <Patterns>
          <Pattern type="MSAA" name="btn" enclose_infos="1" id="43">
              <Position Weight="1.000000"/>
          </Pattern>
       </Patterns>
       <Properties/>
       <InfoTemplates>
          <InfoTemplate>
              <type value="button"/>
              <Position reference="btn.rect"/>
              <FieldName reference="btn.FieldName"/>
          </InfoTemplate>
       </InfoTemplates>
   </RecognitionTemplate>
   <RecognitionTemplate name="MSAA Underline Button" Weight="1.000000">
       <Patterns>
          <Pattern type="MSAA" name="btn" enclose_infos="1" id="43">
              <Position Weight="0.700000"/>
          </Pattern>
          <Pattern type="image" name="underline_image" MaxColDiff="15">
              <Position type="AllCornersBounding" Weight="0.300000">
                 <lo reference="btn.rect.left" value="0"/>
                 <to reference="btn.rect.top" value="0"/>
                 <ro reference="btn.rect.right" value="0"/>
                 <bo reference="btn.rect.bottom" value="0"/>
              </Position>
              <file name="underline_image.gif"/>
          </Pattern>
       </Patterns>
       <Properties/>
       <InfoTemplates>
          <InfoTemplate>
              <type value="button"/>
              <Position reference="btn.rect"/>
              <FieldName reference="btn.FieldName"/>
          </InfoTemplate>
       </InfoTemplates>
   </RecognitionTemplate>
   </ConfigurationTemplate>
```

Für die drei Objektschablonen sind die folgenden Gewichte definiert:
1. 'combobox selected entry' weight="1.0"
2. 'MSAA Underline Button' weight="1.0"
3. 'MSAA Button' weight="0.99"

Die Anwendungsansicht 13 soll für das Beispiel genau der in Fig. 6 mit der aufgeklappten Aufklappliste entsprechen (Applikation MS Word, Hauptfenster) und hier genau nur dem sichtbaren Bereich. Das Bespiel des erfindungsgemäßen Verfahrens, wie in Fig. 12 beschrieben, setzt voraus, dass die Anwendungsschablone 1 und die Anwendungsansicht 13 bereitgestellt wurden. Die Anwendungsschablone 1 wurde oben anhand des XML-Codes beschrieben.

Sollen in der Anwendungsansicht 13 die anhand der Objektschablonen 2 definierten Steuerelemente 7 erkannt werden, wird der Befehl 'Erkenne Steuerelemente' ausgeführt, d.h. das Verfahren gemäß Fig. 12 wird durchgeführt.

Als Erstes werden die Objektschablonen 2 in der Reihenfolge ihres Gewichts geordnet (groß -> klein).

Dann wird die Objektschablone 2 mit dem größten Gewicht, 'combobox selected entry', ausgewählt (Schritt 201 in Fig. 12). Von dieser Objektschablone 2 wird das erste Erkennungsmuster mit dem Namen 'firstimage' aufgerufen (Schritt 202).

Für die graphische Erkennungsmethode (der die Erkennungsmuster des Typs 'image' zugeordnet sind) liegen die Methodenobjekte 5 bereits in Form des Bildschirmabzugs 12 vor (Schritt 203); sie entsprechen in diesem Zusammenhang allen Pixelgebieten in Rechteckform aller möglichen Größenkombinationen.

Jetzt wird das erste Methodenobjekt 5 gewählt (Schritt 204), die initiale Erkennungssicherheit für dieses Methodenobjekt 5 wird auf 1.0 festgesetzt, und das Bild 'firstimage_000.gif' wird mit dem Methodenobjekt 5 verglichen (Schritt 205).

Entspricht das gerade betrachtete Methodenobjekt 5 dem 'schwarzen Pfeil nach unten', so wird 0.0 von der initialen Erkennungssicherheit abgezogen. Die Erkennungssicherheit beträgt immer noch 1.0. Anschließend wird das nächste Erkennungsmuster 'secondimage' gewählt (siehe Schritte 209, 210, 206 in Fig. 12).

Entspricht das gerade betrachtete Methodenobjekt 5 nicht dem 'schwarzen Pfeil nach unten', so wird von der initialen Erkennungssicherheit der Wert des Positionsgewichts ('weight') von 0.7 abgezogen. Damit ergibt sich eine Erkennungssicherheit von 0.3; diese ist aber kleiner als die vorab festgelegte globale Schwelle von 0.8, so dass mit dem nächsten Methodenobjekt 5 fortgefahren wird (Schritte 209, 212, 204 in Fig.12).

In der Anwendungsansicht 13 wird der 'schwarze Pfeil nach unten' (also das Erkennungsmuster 'firstimage') genau dreimal gefunden. D.h. genau für drei der ursprünglich sehr vielen Methodenobjekte 5 wird dann das Erkennungsmuster 'secondimage' gewählt (Schritt 206 in Fig. 12). Das Erkennungsmuster 'secondimage' (ein Pixel breiter vertikaler blauer Streifen der Höhe 18 Pixel) wird innerhalb des für das Erkennungsmuster 'secondimage' durch die Position gegebenen Suchbereichs gesucht (Fig. 12: mit allen graphischen Methodenobjekten 5 innerhalb des Suchbereichs verglichen), wobei 0...N 'passende' Methodenobjekte 5 im Suchbereich enthalten sein können (Schritt 207 in Fig. 12).

Unterhalb der 'Style'-Aufklappliste und der 'Schriftart'-Aufklappliste (siehe Fig. 6) wird keine blaue Spalte gefunden, d.h. hier werden 0 Methodenobjekte im Suchbereich gefunden, die Erkennungssicherheit wird um das Positionsgewicht von 0.3 verringert, beträgt jetzt 0.7 und liegt damit unterhalb der globalen Schwelle von 0.8 (Schritte 208, 209 in Fig. 12).

In diesem Fall wird mit Schritt 212 in Fig. 12 fortgefahren.

Unterhalb der 'Schriftgröße'-Aufklappliste (Fig. 6) ist das Erkennungsmuster 'secondimage' mehrfach zu finden, und es wird das 'passendste' (beste) gewählt, nämlich das erste dem Erkennungsmuster 'secondimage' entprechende Methodenobjekt rechts (entsprechend der in der Objektschablone 2 unter 'Position' definierten Regel 'firstright'; Schritt 207). Die Erkennungssicherheit (Güte) liegt nach wie vor bei 1.0 (Schritt 208 in Fig. 12), da ein Objekt gefunden wurde. Sie ist damit nach wie vor größer als die Schwelle (Grenzwert) von 0.8 und, da sich keine weiteren Erkennungsmuster finden lassen (Schritt 210), wird für das gerade betrachtete initiale Methodenobjekt 5 (also der am weitesten rechts gelegene' schwarze Pfeil nach unten') ein Kandidat erzeugt (Schritt 211 in Fig. 12).

Ein Kandidat 6 ist im vorliegenden Zusammenhang ein potentiell erkanntes Steuerelement 7, das mit einer Maßzahl verknüpft ist, die die Güte der Erkennung angibt. Diese Maßzahl wird im Laufe der Erkennung automatisch generiert.
Vorliegend besetzt der Kandidat, nachdem alle Erkennungsmuster 4 abgearbeitet wurden, gerade die Fläche des blau selektierten Eintrags innerhalb der Aufklappliste auf der Anwendungsansicht 13 (Fig. 6) und hat die Erkennungssicherheit 1.0.

Nun wird die zweite Objektschablone ,MSAA Underline Button' abgearbeitet (beginnend mit Schritt 201).

Das erste Erkennungsmuster 4 mit dem Namen ,btn' ist vom Typ MSAA und wird gewählt (Schritt 202). Die Methode MSAA wird auf die Anwendungsansicht 13 angewendet und alle MSAA-Methodenobjekte 5 werden extrahiert (Schritt 203). Es wird das erste extrahierte MSAA-Methodenobjekt 5 gewählt (Schritt 204), und das erste Erkennungsmuster 4 vom Typ MSAA wird mit dem ersten MSAA-Methodenobjekt 5 verglichen.

Stimmt die ID-Nummer des Erkennungsmusters 4 nicht mit dem Typ des Methodenobjekts 5 überein, wird das Gewicht der Position abgezogen, also 0.7, so dass die Erkennungssicherheit jetzt 0.3 beträgt und mit dem nächsten Methodenobjekt 5 fortgefahren wird.

Stimmt die ID-Nummer mit dem Typ des Methodenobjekts 5 überein (43), ist die resultierende Erkennungssicherheit 1.0, also größer als 0.8, dem festgelegte Grenzwert (Schritte 205, 209).

Es wird dann das zweite Erkennungsmuster 4 mit dem Namen 'underline_image', das vom Typ 'image' ist, gewählt (Schritte 210, 206), und das Bild,underline_image.gif (das unterstrichene 'u'), wird gesucht. Wird es gefunden, bleibt die Erkennungssicherheit bei 1.0, und es wird ein Kandidat 6 erzeugt. Andernfalls wird die Erkennungssicherheit auf 0.7 reduziert. Damit liegt sie unterhalb des Grenzwertes, und es wird mit weiteren Methodenobjekten 5 fortgefahren.

Insgesamt bringt die Objektschablone ,MSAA Underline Button' einen Kandidaten hervor, nämlich genau die Unterstreichung-Schaltfläche. Das erste Erkennungsmuster 4 erkennt dabei drei Objekte: "Fett, Kursiv, Unterstrichen" (siehe Fig. 6 rechts oben). Durch das zweite Erkennungsmuster 4 wird die Menge der Kandidaten auf eins reduziert.

Nun wird die dritte Objektschablone ,MSAA Button' angewandt 201. Das erste Erkennungsmuster 4 mit dem Namen 'btn' ist vom Typ MSAA und wird gewählt (Schritt 202). Die MSAA-Methodenobjekte 5 existieren bereits (diese wurden durch die zweite Objektschablone bereits erzeugt) und werden verwendet (Schritt 203). Es wird das erste extrahierte MSAA-Methodenobjekt 5 gewählt (Schritt 204), und das erste Erkennungsmuster 4 vom Typ MSAA wird mit dem ersten MSAA-Methodenobjekt 5 verglichen.

Stimmt die ID-Nummer mit dem Typ des Methodenobjekts 5 überein (in diesem Fall mit dem Wert 43), ist die resultierende Erkennungssicherheit 1.0, also größer als 0.8, dem festgelegten Grenzwert. Weitere Erkennungsmuster 4 existieren nicht; es wird ein Kandidat erzeugt mit der Erkennungssicherheit 0.99 (Schritte 205, 209, 210, 211 in Fig. 12).

Stimmt die ID-Nummer nicht mit dem Typ des Methodenobjekts 5 überein, so wird das Gewicht der Position abgezogen, also 1.0, so dass die Erkennungssicherheit jetzt 0.0 beträgt. Es wird mit dem nächsten Methodenobjekt 5 fortgefahren, falls dies vorhanden ist; andernfalls wird gestoppt (Schritte 209, 212).

Insgesamt werden durch die Objektschablone ,MSAA Button' drei Kandidaten mit der Erkennungssicherheit 0.99 erzeugt:
1. der Fett Button
2. der Kursiv Button
3. der Unterstrichen Button

Nachdem alle Objektschablonen auf die Anwendungsansicht 13 angewendet wurden, ergibt sich die folgende Kandidatenliste, die die Basis für die Steuerelement-Erzeugung darstellt:
1. blau selektierter Listeneintrag, Erkennungssicherheit 1.0, erzeugt durch 'combobox selected entry'
2. Unterstrichen Button, Erkennungssicherheit 1.0, erzeugt durch 'MSAA Underline Button'
3. Fett Button, Erkennungssicherheit 0.99, erzeugt durch 'MSAA Button'
4. Kursiv Button, Erkennungssicherheit 0.99, erzeugt durch 'MSAA Button'
5. Unterstrichen Button, Erkennungssicherheit 0.99, erzeugt durch 'MSAA Button'

Diese Liste ist entsprechend der Erkennungssicherheit der Kandidaten 6 geordnet.

Das Verfahren geht nun automatisch die Liste durch und generiert aus jedem dieser Kandidaten 6 ein Steuerelement 7, falls die Position, an der der aktuelle Kandidat sein Steuerelement 7 generieren möchte, nicht schon durch ein vorhandenes (von einem gewichtigeren Kandidaten 6 vorher schon erzeugtes) Steuerelement 7 besetzt ist. Somit ergibt sich eine Liste von vier Steuerelementen:
1. blau selektierter Listeneintrag, Erkennungssicherheit 1.0, erzeugt durch 'combobox selected entry'
2. Unterstrichen Button, Erkennungssicherheit 1.0, erzeugt durch 'MSAA Underline Button'
3. Fett Button, Erkennungssicherheit 0.99, erzeugt durch 'MSAA Button'
4. Kursiv Button, Erkennungssicherheit 0.99, erzeugt durch 'MSAA Button'

Dies stellt das Ergebnis des Verfahrens dar: es wurden vier Steuerelemente 7 in der Anwendungsansicht 13 (Fig. 6 rechts) identifiziert.

Im Folgenden werden einzelne Zeilen in der Fig. 10 erläutert:
Zeile 2: ConfigurationTemplate: Hier wird die Anwendungsschablone 1 unter Angabe des Namens und der Version angegeben.
Zeile 3: Header Information der Anwendungsschablone 1, threshold == Schwellwert. Sinkt die Erkennungssicherheit eines Steuerelementes 7 einer Objektschablone 2 innerhalb des Erkennungsprozesses unter den Schwellenwert, wird das Methodenobjekt 5 des ersten Erkennungsmusters verworfen, der Erkennnungsprozess bricht ab und wird mit dem nächsten Methodenobjekt fortgesetzt.
Zeile 4: Angaben zur Identifizierung der Anwendung.
Zeile 6: RecognitionTemplate == Objektschablone 2. Im vorliegenden Beispiel geht es im die "Speichern"-Schaltfläche. Hier werden die globalen Parameter der Objektschablone 2 gesetzt. Das Gewicht entspricht der initialen Erkennungssicherheit des Erkennungsprozesses für ein Methodenobjekt 5.
Zeilen 8 - 10: Pattern == Erkennungsmuster 4, Das erste Pattern ist vom Typ "MSAA". Es folgen weitere Parameterangaben, insbesondere das Gewicht ("Weight"): falls die ID-Nummer ,id' nicht mit denen der Methodenobjekte 5 übereinstimmt, wird dieses Gewicht von der initialen Erkennungssicherheit abgezogen, und der Erkennungsabstand vergrößert sich.
Zeilen 11 - 19: Das zweite Pattern ist vom Typ "image". Es folgen weitere Parameterangaben, insbesondere das Gewicht ("Weight"): wird die unter "file" angegebene Datei "save_btn.gif" nicht innerhalb des durch die "Position" gegebenen Suchbereichs gefunden, wird der Erkennungsabstand um 0.25 erhöht.
Zeilen 22 - 29: Steuerelement-Kandidat 6, der seine Eigenschaften aus den im Erkennungsprozess ermittelten Ergebnissen der vorher durchgelaufenen Erkennungsmuster bezieht.

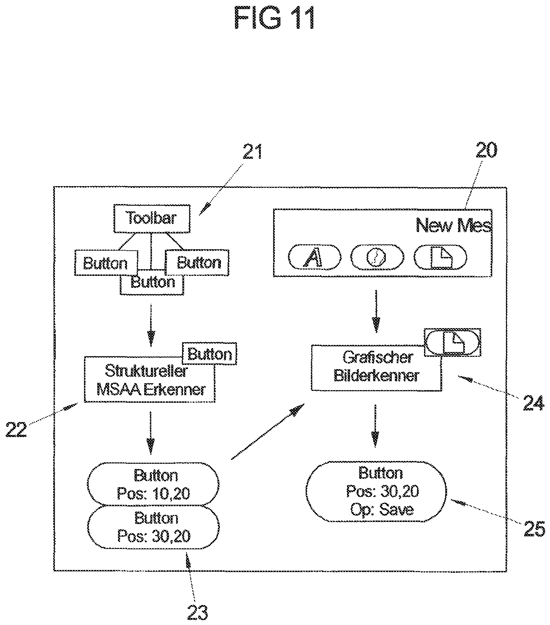

In Fig. 11 ist ein weiteres Beispiel schematisch dargestellt: rechts oben befindet sich ein typischer Ausschnitt einer Anwendung 20, sie enthält u.a. eine Schaltfläche für eine "Sichern"-Funktion. Die Schaltfläche stellt ein Steuerelement 7 dar. Die Sichern-Funktion ist in Form einer Schaltfläche ("Button") in einer Werkzeugleiste ("Toolbar") angeordnet. Im Baum 21 ist dargestellt, dass das Objekt "Toolbar" drei "Button"-Objekte aufweist.

In dieser Ansicht soll die Schaltfläche zum Sichern identifiziert werden, wobei im Schritt 22 zunächst strukturelle Informationen ausgewertet werden. Über die MSAA-Schnittstelle werden im Schritt 23 mehrere Schaltflächen mit Angaben zur Position erkannt, über die Funktion der Schaltfläche ist zunächst nichts bekannt.

Anschließend wird im Schritt 24 mit Hilfe der graphischen Erkennung anhand eines Referenzbildes festgestellt, bei welcher Schaltfläche es sich um diejenige zum Speichern einer Information handelt. Diese Information wird dann als Datensatz 25 abgespeichert.

Dabei nutzt das graphische Erkennungsmuster die schon bekannte Positionsinformation als Startposition für die Suche nach dem Referenzbild. Dadurch wird der Suchraum erheblich verkleinert und die Erkennungszeit gesenkt. Am Ende liegt ein Kandidat 6 für das Steuerelement 7 in Form eines Datensatzes 25 vor, bei dem Position und Funktion bekannt sind.

Die Erfindung beschränkt sich in ihrer Ausführung nicht auf die vorstehend angegebenen bevorzugten Beispiele. Vielmehr ist eine Anzahl von Varianten denkbar, die von dem erfindungsgemäßen Verfahren und der erfindungsgemäßen Vorrichtung auch bei grundsätzlich anders gearteten Ausführungen Gebrauch machen.

In jedem Fall sind die Erkennung der graphischen Merkmale und die Erkennung der strukturellen Merkmale unabhängig vom Inhalt und/oder der Funktion der Steuerelemente 7. So ist insbesondere keine Auswertung von so genannten Tags der Steuerelemente 7 notwendig. Damit ist es möglich, automatisch, ohne Kenntnis der Funktion der Steuerelemente 7 effizient eine Identifikation durchzuführen.

## Patentansprüche

1. Verfahren zur automatischen Identifizierung von mindestens einem Steuerelement (7) in einer Anwendungsansicht (13) eines Computerprogramms (11) unter Verwendung von zwei Erkennungsmustern (4), die in einer Objektschablone (2) abgespeichert sind, welche Informationen über einen Typ von Steuerelementen (7) des Computerprogramms (11) enthalten, wobei das erste Erkennungsmuster (4) die Struktur eines Steuerelementes (7) vom Typ Schaltfläche, Textfeld, oder Tabellenzelle identifiziert, und das zweite Erkennungsmuster (4) den Dateinamen des die geometrische Form des Steuerelementes (7) repräsentierenden Bildes und einen Suchbereich enthält, wobei die Objektschablone (2) ein Gewicht umfasst, das angibt, mit welcher Präzision das Steuerelement (7) in der Objektschablone beschrieben wird, und einem Grenzwert, wobei
a) eine Erkennungsmethode (3), welche, durch ein Erkennungsmittel (14), aus der Anwendungsansicht (13) Methodenobjekte (5) generiert, welche aufgrund von zwei Erkennungsmustern (4) einer Prüfung unterzogen werden, wobei jedes Methodenobjekt (5) ein potentielles Steuerelement (7) ist,
b) in Abhängigkeit von der auf den zwei Erkennungsmustern (4) basierenden Prüfung die Erkennungssicherheit bezüglich jedes der generierten Methodenobjekte ermittelt wird,
c) in Abhängigkeit von der erzielten Erkennungssicherheit im Vergleich zum Grenzwert der Status des mindestens einen Steuerelements (7) als "identifiziert" oder "nicht identifiziert" bestimmt wird,
wobei die Ermittlung der Erkennungssicherheit mittels des ersten Erkennungsmusters (4) einen Vergleich des im Erkennungsmuster gespeicherten Typs mit dem Typ des Methodenobjekts (5) umfasst, wobei falls der Typ des Erkennungsmusters (4) mit dem Typ des Methodenobjekts übereinstimmt, die Erkennungssicherheit das Gewicht der Objektschablone wird, und falls der Typ des Erkennungsmusters (4) nicht mit dem Typ des Methodenobjekts (5) übereinstimmt, die Erkennungssicherheit das Gewicht der Objektschablone abzüglich des Erkennungsabstandes zwischen erstem Erkennungsmuster (4) und Methodenobjekt (5) wird,
wobei anschließend die Ermittlung der Erkennungssicherheit mittels des zweiten Erkennungsmusters (4) die Suche des in der Datei gespeicherten Bildes auf einem Bildschirmabzug (12) der Anwendungsansicht (13) innerhalb des gespeicherten Suchbereiches umfasst, wobei falls das Bild im Suchbereich gefunden wird, die Erkennungssicherheit unverändert bleibt, und falls das Bild nicht im Suchbereich gefunden wird, der Erkennungsabstand zwischen zweitem Erkennungsmuster (4) und Methodenobjekt von der Erkennungssicherheit abgezogen wird.

2. Verfahren nach Anspruch 1, **dadurch gekennzeichnet, dass** die Erkennung mittels des ersten Erkennungsmusters (4) auf das Windows API, das MSAA, eine HTML-Struktur, eine XML-Struktur, ein natives Excel Modell, ein natives Word Modell, ein SAPGUI Skript und/oder Java abstützt.

3. Vorrichtung zur automatischen Identifizierung von mindestens einem Steuerelement (7), wobei die Vorrichtung konfiguriert ist, um Operationen nach einem der vorhergehenden Ansprüche durchzuführen.

## Claims

1. A method for automatically identifying at least one control element (7) in an application view (13) of a computer program (11) using two detection patterns (4) stored in an object template (2), which include information on a type of control elements (7) of the computer program (11), wherein the first detection pattern (4) identifies the structure of a control element (7) of the type button, text box, or table cell, and the second detection pattern (4) includes the file name of the image representing the geometric shape of the control element (7) and a search area, wherein the object template (2) comprises a weight indicating with which precision the control element (7) is described in the object template, an a threshold, wherein
a) a detection method (3) which, by a detection means (14), generates method objects (5) from the application view (13), which are subjected to testing based on two detection patterns (4), each method object (5) being a potential control element (7),
b) depending on the testing based on the two detection patterns (4), detection reliability with respect to each of the generated method objects is determined,
c) depending on the detection reliability achieved compared to the threshold, the status of said at least one control element (7) is determined to be "identified" or "not identified",
wherein the determination of the detection reliability by means of the first detection pattern (4) includes a comparison of the type stored in the detection pattern with the type of the method object (5), wherein if the type of the detection pattern (4) matches the type of the method object, the detection reliability becomes the weight of the object template, and if the type of the detection pattern (4) does not match the type of the method object (5), the detection reliability becomes the weight of the object template minus the detection distance between the first detection pattern (4) and the method object (5),
wherein, subsequently, the determination of the detection reliability by means of the second detection pattern (4) comprises the search of the image stored in the file on a screenshot (12) of the application view (13) within the stored search area, wherein if the image is found in the search area, the detection reliability remains unchanged, and if the image is not found in the search area, the detection distance between the second detection pattern (4) and the method object is deducted from the detection reliability.

2. The method according to claim 1, **characterized in that** the detection by means of the first detection pattern (4) relies on the Windows API, the MSAA, an HTML structure, an XML structure, a native Excel model, a native Word model, a SAPGUI script and/or Java.

3. An apparatus for automatically identifying at least one control element (7), the apparatus being configured to perform operations according to one of the preceding claims.

## Revendications

1. Procédé d'identification automatique d'au moins un élément de commande (7) dans une vue d'application (13) d'un programme informatique (11) en utilisant deux motifs de reconnaissance (4) qui sont mémorisés dans un modèle d'objet (2), qui contiennent des informations sur un type d'éléments de commande (7) du programme informatique (11), dans lequel le premier motif de reconnaissance (4) identifie la structure d'un élément de commande (7) du type bouton de commande, champ de texte ou cellule de tableau, et le second motif de reconnaissance (4) contient le nom de fichier de l'image représentant la forme géométrique de l'élément de commande (7) et une zone de recherche, dans lequel le modèle d'objet (2) comprend un poids qui indique avec quelle précision l'élément de commande (7) est décrit dans le modèle d'objet, et une valeur limite, dans lequel
a) une méthode de reconnaissance (3) qui génère par un moyen de reconnaissance (14) à partir de la vue d'application (13) des objets de méthode (5) qui sont soumis à un contrôle en raison de deux motifs de reconnaissance (4), dans lequel chaque objet de méthode (5) est un élément de commande potentiel (7),
b) la sécurité de reconnaissance par rapport à chacun des objets de méthode générés est déterminée en fonction du contrôle se basant sur les deux motifs de reconnaissance (4),
c) le statut de l'au moins un élément de commande (7) est défini comme « identifié » ou « non identifié » en fonction de la sécurité de reconnaissance obtenue par rapport à la valeur limite,
dans lequel la détermination de la sécurité de reconnaissance au moyen du premier motif de reconnaissance (4) comprend une comparaison du type mémorisé dans le motif de reconnaissance au type de l'objet de méthode (5), dans lequel au cas où le type du motif de reconnaissance (4) coïncide avec le type de l'objet de méthode, la sécurité de reconnaissance devient le poids du modèle d'objet, et au cas où le type du motif de reconnaissance (4) ne coïncide pas avec le type de l'objet de méthode (5), la sécurité de reconnaissance devient le poids du modèle d'objet déduction faite de l'écart de reconnaissance entre le premier motif de reconnaissance (4) et l'objet de méthode (5),
dans lequel la détermination de la sécurité de reconnaissance au moyen du second motif de reconnaissance (4) comprend ensuite la recherche de l'image mémorisée dans le fichier sur une capture d'écran (12) de la vue d'application (13) au sein de la zone de recherche mémorisée, dans lequel au cas où l'image est trouvée dans la zone de recherche, la sécurité de reconnaissance reste inchangée, et au cas où l'image n'est pas trouvée dans la zone de recherche, l'écart de reconnaissance entre le second motif de reconnaissance (4) et l'objet de méthode est déduit de la sécurité de reconnaissance.

2. Procédé selon la revendication 1, **caractérisé en ce que** la reconnaissance au moyen du premier motif de reconnaissance (4) s'appuie sur l'interface de programmation Windows, le MSAA, une structure HTML, une structure XML, un modèle Excel natif, un modèle Word natif, un script SAPGUI et/ou Java.

3. Dispositif d'identification automatique d'au moins un élément de commande (7), dans lequel le dispositif est configuré pour effectuer des opérations selon une des revendications précédentes.
